# NEUE EUROPÄISCHE PATENTSCHRIFT

(11) **EP 1 334 843 B2**
(45) Veröffentlichungstag und Bekanntmachung des Hinweises auf die Entscheidung über den Einspruch: **15.01.2014**
(45) Hinweis auf die Patenterteilung: 10.09.2008
(21) Anmeldenummer: 03001141.5
(22) Anmeldetag: 21.01.2003
(51) Int. Cl.: B41N 7/00, B41N 10/04, B41F 22/00

(54) **Schichtkörper zum Verhüten des Verschmierens von Maschinenteilen oder Bedruckstoffen in einer Verarbeitungsmaschine**
Layered body for the avoidance of smearing of machine parts or printing substrates in a processing machine
Corps multicouche pour éviter que des parties de la machine ou des supports d'impression dans une machine de traitement soient salis

(30) Priorität: 09.02.2002 DE 20202014 U; 07.03.2002 DE 20203719 U
(43) Veröffentlichungstag der Anmeldung: 13.08.2003
(73) Patentinhaber: manroland sheetfed GmbH, 63075 Offenbach (DE)
(72) Erfinder: Kremer, Ruth, Dr.-Ing., 61449 Steinbach (DE); Schölzig, Jürgen, 55126 Mainz-Finthen (DE)
(74) Vertreter: Stahl, Dietmar

(56) Entgegenhaltungen:
- EP-A- 0 732 205
- EP-A- 1 108 761
- EP-A1- 1 120 283
- WO-A1-01//12342
- DE-A- 2 721 417
- DE-A- 19 850 968
- US-A- 3 791 644
- US-A- 5 320 042
- US-A- 6 020 417
- PATENT ABSTRACTS OF JAPAN Bd. 0123, Nr. 76 (M-750), 7. Oktober 1988 (1988-10-07) & JP 63 126758 A (MATSUSHITA ELECTRIC IND CO LTD), 30. Mai 1988 (1988-05-30)
- PATENT ABSTRACTS OF JAPAN Bd. 0171, Nr. 06 (M-1375), 4. März 1993 (1993-03-04) & JP 4 296556 A (TOPPAN PRINTING CO LTD), 20. Oktober 1992 (1992-10-20)

## Beschreibung

Die Erfindung betrifft einen Schichtkörper zum Verhüten des Verschmierens von Maschinenteilen oder Bedruckstoffen in einer Verarbeitungsmaschine nach dem Oberbegriff der unabhängigen Ansprüche. Derartige Schichtkörper sind insbesondere in Druckmaschinen, Lackiermaschinen bzw. in Kombinationen aus Druck- und Lackwerken von Verarbeitungsmaschinen für bahnförmige oder bogenförmige Bedruckstoffe einsetzbar.

### [Stand der Technik]

Ein Schichtkörper dieser Art ist aus DE 198 50 968 A1 als verschleißhemmend, farbabweisende Beschichtung, insbesondere von Druckmaschinenkomponenten bekannt. Der Schichtkörper weist ein verschleißfestes Material in Form von Metalloxyden oder verschleißarmen Hartmetallen auf. Zusätzlich ist darauf ein Siegelstoff aus der Gruppe der Polyorganosiloxane angeordnet, der bei ca. 100° C bis 170° C ausgehärtet ist.

Aus US 3 791 644 ist eine Trommel bekannt, auf der ein farbabweisender Schichtkörper aus einem Polytetrafluorethylen angeordnet ist. Die Trommel ist auch als bogenführende Trommel einsetzbar, insbesondere bei frisch bedruckten und mit der bedruckten Seite auf der Trommel aufliegenden Bogen.

Eine weitere farbabweisende Beschichtung ist aus DE 101 15 876 A1 bekannt. Um zuverlässig und auf Dauer ein Verschmieren von Elementen bzw. der Bedruckstoffe zu verhindern ist auf einem mit dem Druckprodukt in Kontakt kommenden Element eine Beschichtung angeordnet, die ein Material enthält, welches durch Bestrahlung mit Licht farbabweisend wird. Bevorzugt enthält das Material Titanoxid oder Zinkoxid. Das Licht ist insbesondere mittels einer UV-Lichtquelle erzeugbar.

Die Schichtkörper in den oben genannten Dokumenten zeigen Mittel zum Verhüten des Verschmierens von Maschinenteilen bzw. von Bedruckstoffen auf, welche ausschließlich farbabweisende Eigenschaften aufweisen.
Der Einsatz von UV-Lichtquellen ist konstruktiv und unter dem Aspekt des Energieverbrauches aufwendig. Bei Nachlassen der farbabweisenden Eigenschaften der Beschichtung muß die Bestrahlung wiederholt werden.

Weiterhin ist aus EP 0 732 205 A1 ein Farbkasten, vorzugsweise ein Keilfarbkasten, für eine Druckmaschine bekannt, welcher einen Farbkastenboden mit Seitenwänden sowie eine Dosiereinrichtung aufweist. Der Farbkasten ist einer Farbkastenwalze anstellbar zugeordnet. In einer Weiterbildung ist der Farbkastenboden mit einer oleophoben Beschichtung versehen, welche vorzugsweise eine Eloxal- oder PTFE-Beschichtung ist.
Aus EP 0 574 124 A1 ist eine Beschichtungseinrichtung mit einem Kammerrakel mit einem Kammergehäuse und zwei Rakelblättern sowie einer zugeordneten Auftragwalze bekannt.

### [Aufgabe der Erfindung]

Der Erfindung liegt die Aufgabe zu Grunde einen Schichtkörper der eingangs genannten Art zu schaffen, der die genannten Nachteile vermeidet, und der die Stillstands- und Rüstzeiten verkürzt.

Die Aufgabe wird durch Ausbildungsmerkmale der unabhängigen Ansprüche 1 und 2 gelöst. Weiterbildungen ergeben sich aus den Unteransprüchen.

Erfindungsgemäß ist dieser Schichtkörper auf Kammerrakel-Innengehäusen sowie zugeordneten farb-/lackfürenden Teilen oder auf einseitig offenen Farbkasten- bzw. Rakelwannen-Innengehäusen, bevorzugt einschließlich deren Seitenwänden, einsetzbar, um ein Verschmieren der oder ein Anhaften an den genannten Maschinenteilen bzw. der Bedruckstoffe durch Druckfarbe und/oder Lack spürbar zu reduzieren bzw. zu vermeiden.

Ein weiterer Vorteil besteht darin, dass der Schichtkörper haftfest mit einem Substrat als Trägermaterial gebildet ist. Der Schichtkörper ist fest mit einem Maschinenteil verbindbar oder ist lösbar als Einsatz an einem Maschinenteil anordenbar.

Es ist bekannt, dass auf einem den Bedruckstoff führenden Zylinder, bevorzugt einem Bogenführungszylinder (einschließlich einer bogenführenden Trommel), mit wenigstens einem umfangsseitig daran angeordnetem Schichtkörper eine dem Schichtkörper zugewandte, bedruckte und/oder lackierte Seite eines Bedruckstoffes abschmierfrei transportierbar ist.

Es ist auch bekannt, dass der Bedruckstoff auch bei nicht am Druck-/Lackierprozess beteiligten Druck-/Lackwerken durch einen Druck-/Lackspalt abschmierfrei führbar ist. Hierzu sind auf dem Gummituch-/Formzylinder und bei Bedarf auf dem den Bedruckstoff führenden Zylinder umfangsseitig derartige Schichtkörper anordenbar.

Durch die Anordnung eines derartigen Schichtkörpers mit der entsprechenden Oberflächenschicht innerhalb eines Farbkastens bzw. eines Kammerrakels wird einem Verschmieren der Oberfläche mit Farbe bzw. Lack (einschließlich dem Anhaften von Farbe/Lack) spürbar entgegen gewirkt und es sind sehr gute Reiinigungsergebnisse erzielbar.

Durch den Einsatz eines oder mehrerer Schichtkörper mit der entsprechenden Oberflächenschicht sind die Produktionszeiten in einer Verarbeitungsmaschine zwischen Inspektions- bzw. Reinigungsintervallen verlängerbar und die Stillstands- bzw. Rüstzeiten sind verkürzbar.

Schließlich wird die Bedruckstoffführung sowie die Druck- und Lackierqualität der Bedruckstoffe verbessert.

### [Beispiele]

Die Erfindung soll an einem Ausführungsbeispiel näher erläutert werden. Dabei zeigen schematisch
- Fig. 1: eine Bogenrotationsdruckmaschine,
- Fig. 2: eine Bogenführung im Bereich eines Druck-/Lackspaltes,

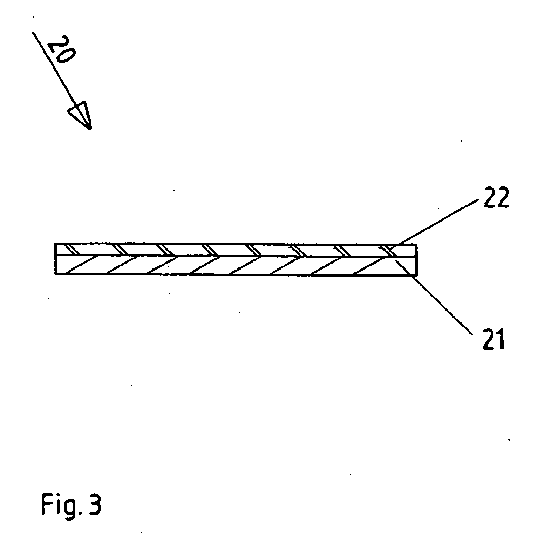

- Fig. 3: einen Aufbau des Schichtkörpers (Schnitt).

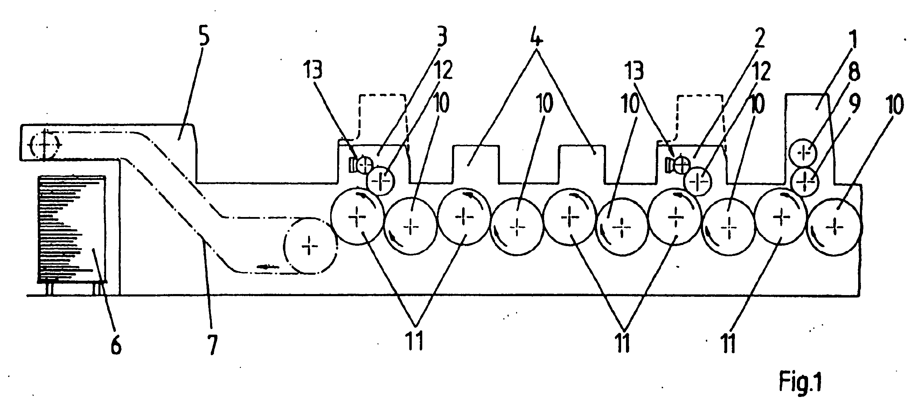

In Fig. 1 ist eine Teilansicht einer Rotationsdruckmaschine mit Inline-Veredelung gezeigt. Dabei ist in Förderrichtung 17 eines bogenförmigen Bedruckstoffes ein letztes Druckwerk 1 dargestellt, dem ein erstes Lackwerk 2, Trocknereinheiten 4, ein zweites Lackwerk 3 sowie ein Ausleger 5 mit umlaufenden Fördersystem 7 und Auslegerstapel 6 nachgeordnet sind. Das Druckwerk 1 weist einen Plattenzylinder 8, einen Gummituchzylinder 9 sowie einen Druckzylinder 11 als Bogenführungszylinder auf. Dem Plattenzylinder 8 ist ein Farbwerk mit einem Farbkasten und ggf. ein Feuchtwerk zugeordnet.

Das erste und zweite Lackwerk 2, 3 weist jeweils einen Formzylinder 12 auf, der mit einem Dosiersystem 13, vorzugsweise gebildet aus einem Kammerrakel 14 mit zwei Rakelblättern und einer gerasterten Auftragwalze 15, in Funktionsverbindung ist. Jeder Formzylinder 12 ist mit einem bogenführenden Druckzylinder 11 als Bogenführungszylinder in Funktionsverbindung.

Zwischen den bogenführenden Druckzylindern 11 der Druckwerke 1, der Lackwerke 2,3 und der Trocknereinheiten 4 sind bogenführende Transferzylinder 10 angeordnet, d.h. zwischen zwei Druckzylindern 11 ist wenigstens ein Transferzylinder 10 angeordnet. In einer Weiterbildung ist wenigstens ein Transferzylinder 10 als Wendezylinder für die Bogenwendung nach dem Prinzip der Hinterkantenwendung auf Basis der Ein- oder Mehrtrommelwendung anordenbar.

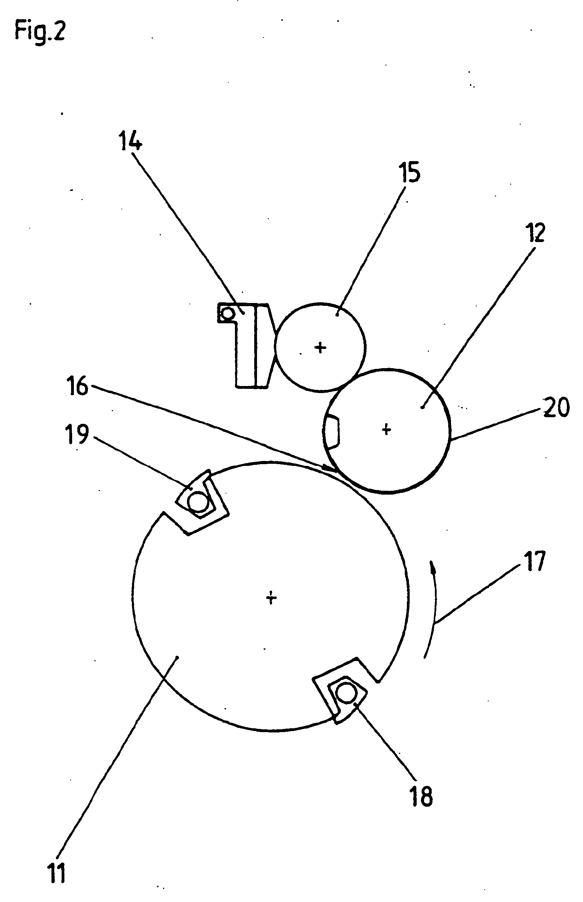

In Fig. 2 ist eines der Lackwerke 2 oder 3 gezeigt, bei dem der Formzylinder 12 in einem Druck-/Lackspalt 16 zum bogenführenden Druckzylinder 11 außer Kontakt ist. D.h. das Lackwerk 2 oder 3 ist im vorliegenden Fall inaktiv und somit nicht am Lackierprozeß beteiligt, hingegen führt der Druckzylinder 11 den Bedruckstoff in Förderrichtung 17. Dazu weist der Druckzylinder 11 ein erstes und ein zweites Greifersystem 18, 19 umfangsseitig symmetrisch angeordnet auf.

Zum Verhüten des Verschmierens von Maschinenteilen oder Bedruckstoffen in einer Verarbeitungsmaschine ist ein Schichtkörper 20 mit einem lagenweisen, bevorzugt flächigen Aufbau, enthaltend ein Substrat 21 und eine farb-/ lackabweisende Oberflächenschicht 22, vorgesehen.

Der Schichtkörper 20 besteht aus einem Substrat 21 auf dem eine Oberflächenschicht 22 aus einem Homopolymer haftfest angeordnet ist oder zumindest ist in der Oberflächenschicht 22 ein Homopolymer enthalten. Das Homopolymer ist als ein Polyvinylfluorid (PVF) oder ein Polyvinylidenfluorid (PVDF) ausgebildet.

Alternativ ist die Oberflächenschicht 22 aus einem Copolymerisat gebildet und haftfest auf dem Substrat 21 angeordnet oder zumindestens ist in der Oberflächenschicht 22 ein Copolymerisat enthalten.
Die Copolymerisate ein Perfluorethylenpropylen (FEP) oder ein Perfluoralkoxy-Copolymer (PFA) oder ein Ethylentetrafluorethylen (ETFE) oder ein Ethylen-Chlortrifluorethylen (E-CTFE).

Alternativ ist die Oberflächenschicht 22 aus fluorierten Acrylaten haftfest auf dem Substrat 21 angeordnet.

Erfindungsgemäß ist das Substrat 21 des Schichtkörpers 20 als ein Farbkasten-Innengehäuse, beispielsweise bei einem Keilfarbkasten, ausgebildet auf dem eine Oberflächenschicht 22 aus einem Homopolymer oder einem Copolymer haftfest angeordnet ist. Zumindest weist der Boden des Farbkasten-Innengehäuses eine derartige Ausbildung auf. Bevorzugt sind ebenso die Seitenwände (innen) in einer derartigen Ausbildung ausführbar.

Erfindungsgemäß ist das Substrat 21 des Schichtkörpers 20 als ein Kammerrakel-Innengehäuse ausgebildet auf dem eine Oberflächenschicht 22 aus einem Homopolymer oder einem Copolymer haftfest angeordnet ist.

In einer Weiterbildung ist das Substrat 21 eines Schichtkörpers jeweils als eine Zuführleitung und eine Rücklaufleitung sowie als Ablauf bzw. Abläufe eines Kammerrakels ausgebildet. Auf dem Substrat 21 ist eine Oberflächenschicht 22 aus einem Homopolymer oder einem Copolymer haftfest angeordnet.
In einer Weiterbildung ist eine Rücklaufwanne des Kammerrakels als Substrat 21 ausgebildet und auf dem Substrat 21 ist eine Oberflächenschicht 22 aus einem Homopolymer oder einem Copolymer haftfest angeordnet.
In einer Weiterbildung ist das Innere eines Konditionierbehälters, vorzugsweise ein Farb- oder ein Lackvorratsbehälter, als Substrat 21 ausgebildet und auf dem Substrat 21 ist eine Oberflächenschicht 22 aus einem Homopolymer oder einem Copolymer haftfest angeordnet.

Es ist bekannt, dass Substrat 21 des Schichtkörpers 20 als ein Zylinder, vorzugsweise ein Gummituchzylinder 9, ein Transferzylinder 10, ein Druckzylinder 11, ein Formzylinder 12, ausgebildet ist, auf dem eine Oberflächenschicht 22 aus einem Homopolymer oder einem Copolymer haftfest angeordnet ist oder zumindest in der Oberflächenschicht 22 ein Homopolymer oder ein Copolymer enthalten ist bzw. sind. Auf dem Gummituch-/ Formzylinder 9, 12 ist ein Gummituch bzw. eine Druckform lösbar anordenbar. Auf dem Transferzylinder 10 bzw. dem Druckzylinder 11 (Mantelfläche) wird auf der Oberflächenschicht 22 des Schichtkörpers 20 der Bedruckstoff geführt.

Alternativ ist das Substrat 21 eines Schichtkörpers 20 mit einer Oberflächenschicht 22 durch ein Maschinenteil der Verarbeitungsmaschine oder eine lösbar an dem Maschinenteil anordenbare Platte, Folie oder ein Sleeve gebildet. Das Substrat 21 als Maschinenteil ist ein metallisches Material oder ein Kunststoffmaterial oder ein keramisches Material oder enthält zumindest ein metallisches Material oder ein Kunststoffmaterial oder ein keramisches Material.

Alternativ ist das Substrat 21 als Kunststoffmaterial ein laminiertes Gummituch oder ein Faserverbundwerkstoff, vorzugsweise ein CFK-Material.

Alternativ ist der Schichtkörper 20 auf einem Gummituch-/ Formzylinder 9, 12 lösbar anordenbar oder der Gummituch-/Formzylinder 9, 12 ist selbst das Substrat 21. Weiterhin ist ein derartiger Schichtkörper 20 auf einem Bogenführungselement anordenbar oder das Bogenführungselement ist das Substrat 21. Als Bogenführungselemente sind beispielsweise Druckzylinderblasvorrichtungen, Bogenleitflächen, Bogenleitstäbe, Führungsrollen etc. einsetzbar.

Darüber hinaus ist ein derartiger Schichtkörper 20 auf einem Bogenführungszylinder, insbesondere einem Transferzylinder 10 und/oder einem Druckzylinder 11, angeordnet oder der Bogenführungszylinder 10, 11 selbst ist das Substrat 21. Beispielsweise ist der Schichtkörper 20 als Sleeve, Folie oder als Platte bzw. mehrere Platten am Umfang der Bogenführungszylinder 10, 11 lösbar anordenbar.

### [Bezugszeichenliste]

- 1 -: Druckwerk
- 2 -: erstes Lackwerk
- 3 -: zweites Lackwerk
- 4 -: Trocknereinheit
- 5 -: Ausleger
- 6 -: Auslegerstapel
- 7 -: Fördersystem
- 8 -: Plattenzylinder
- 9 -: Gummituchzylinder
- 10 -: Transferzylinder
- 11 -: Druckzylinder
- 12 -: Formzylinder
- 13 -: Dosiersystem
- 14 -: Kammerrakel
- 15 -: Auftragwalze
- 16 -: Druck-/Lackspalt
- 17 -: Förderrichtung
- 18 -: erstes Greifersystem
- 19 -: zweites Greifersystem
- 20 -: Schichtkörper
- 21 -: Substrat
- 22 -: Oberflächenschicht

## Patentansprüche

1. Schichtkörper mit einer farb- oder lackabweisenden Beschichtung zum Verhüten des Verschmierens von Maschinenteilen oder Bedruckstoffen in einer Verarbeitungsmaschine, **dadurch gekennzeichnet,**
**dass** auf einem Substrat (21) eine Oberflächenschicht (22) aus
- Polyvinylfluorid (PVF) oder Polyvinylidenfluorid (PVDF) als Homopolymer, oder
- Perfluorethylenpropylen (FEP) oder Perfluoralkoxy-Copolymer (PFA) oder Ethylentetrafluorethylen (ETFE) oder Ethylen-Chlortrifluorethylen (E-CTFE) als Copolymerisat, oder
- fluorierten Acrylaten
haftfest angeordnet ist, wobei das Substrat (21) als ein Farbkasten-Innengehäuse ausgebildet ist.

2. Schichtkörper mit einer farb- oder lackabweisenden Beschichtung zum Verhüten des Verschmierens von Maschinenteilen oder Bedruckstoffen in einer Verarbeitungsmaschine, **dadurch gekennzeichnet,**
**dass** auf einem Substrat (21) eine Oberflächenschicht (22) aus
- Polyvinylfluorid (PVF) oder Polyvinylidenfluorid (PVDF) als Homopolymer, oder
- Perfluorethylenpropylen (FEP) oder Perfluoralkoxy-Copolymer (PFA) oder Ethylentetrafluorethylen (ETFE) oder Ethylen-Chlortrifluorethylen (E-CTFE) als Copolymerisat, oder
- fluorierten Acrylaten
haftfest angeordnet ist,
wobei das Substrat (21) als ein Kammerrakel-Innengehäuse ausgebildet ist.

3. Schichtkörper nach wenigstens Anspruch 2, **dadurch gekennzeichnet,**
**dass** eine Zuführleitung und eine Rücklaufleitung sowie Abläufe des Kammerrakels jeweils als Substrat (21) ausgebildet sind und auf dem Substrat (21) die Oberflächenschicht (22) haftfest angeordnet ist.

4. Schichtkörper nach wenigstens Anspruch 2, **dadurch gekennzeichnet,**
**dass** eine Rücklaufwanne des Kammerrakels als Substrat (21) ausgebildet ist und auf dem Substrat (21) die Oberflächenschicht (22) haftfest angeordnet ist.

5. Schichtkörper nach wenigstens Anspruch 2, **dadurch gekennzeichnet, dass** ein Konditionierbehälter, vorzugsweise ein Farb- oder Lackvorratsbehälter, im Inneren als Substrat (21) ausgebildet ist und auf dem Substrat (21) die Oberflächenschicht (22) haftfest angeordnet ist.

## Claims

1. A layered body with an ink or varnish-deflecting coating for preventing the smudging of machine parts or substrates in a processing machine, **characterized in that** on a substrate (21) a surface layer (22) of
- polyvinyl fluoride (PVF) or polyvinylidene fluoride (PVDF) as homopolymers, or
- fluorinated ethylene propylene (FEP) or perfluoroalkoxy copolymer (PFA) or
- ethylene tetrafluoroethylene (ETFE) or ethylene chlorotrifluoroethylene (E-CTFE) as copolymerisate, or
- fluorinated acrylates is arranged in a highly adhesive manner, wherein the substrate (21) is formed as an ink fountain inner housing.

2. The layered body with an ink or varnish-deflecting coating for preventing the smudging of machine parts or substrates in a processing machine, **characterized in that** on a substrate (21) a surface layer (22) of
- polyvinyl fluoride (PVF) or polyvinylidene fluoride (PVDF) as homopolymers, or
- fluorinated ethylene propylene (FEP) or perfluoroalkoxy copolymer (PFA) or
- ethylene tetrafluoroethylene (ETFE) or ethylene chlorotrifluoroethylene (E-CTFE) as copolymerisate, or
- fluorinated acrylates is arranged in a highly adhesive manner, wherein the substrate (21) is formed as an ink fountain inner housing, wherein the substrate (21) is designed as a chambered doctor blade inner housing.

3. The layered body according to at least Claim 2, **characterized in that** a supply line and a return line as well as drains of the chambered doctor blade are each formed as a substrate (21) and the surface layer (22) is arranged on the substrate (21) in a highly adhesive manner.

4. The layered body according to at least Claim 2, **characterized in that** a return tub of the chambered doctor blade is formed as a substrate (21) and the surface layer (22) is arranged on the substrate (21) in a highly adhesive manner.

5. The layered body according to at least Claim 2, **characterized in that** a conditioning container, preferentially an ink or varnish storage container, is formed in the interior as a substrate (21) and the surface layer (22) is arranged on the substrate (21) in a highly adhesive manner.

## Revendications

1. Corps stratifié comportant un revêtement repoussant l'encre ou le vernis pour empêcher le lutage de pièces de machines ou de supports d'impression dans une machine de transformation, **caractérisé en ce que**,
sur un substrat (21), est disposée sans possibilité d'adhérence une couche superficielle (22) en
- fluor de polyvinyle (PVF) ou fluor de polyvinylidène (PVDF) faisant office d'homopolymère ou en
- perfluoréthylène propylène (FEP) ou copolymère de perfluoralcoxyde (PFA) ou éthylène tétrafluoréthylène (ETPE) ou éthylène chlorotrifluoréthylène (E-CTFE) faisant office de copolymérisat ou en
- acrylates fluorés, le substrat (21) se présentant sous forme d'un boîtier intérieur de compartiment à encre.

2. Corps stratifié comportant un revêtement repoussant l'encre ou le vernis pour empêcher le lutage de pièces de machines ou de supports d'impression dans une machine de transformation, **caractérisé en ce que**,
sur un substrat (21), est disposée sans possibilité d'adhérence une couche superficielle (22) en
- fluor de polyvinyle (PVF) ou fluor de polyvinylidène (PVDF) faisant office d'homopolymère ou en
- perfluoréthylène propylène (FEP) ou copolymère de perfluoralcoxyde (PFA) ou éthylène tétrafluoréthylène (ETPE) ou éthylène chlorotrifluoréthylène (E-CTFE) faisant office de copolymérisat ou en
- acrylates fluorés, le substrat (21) se présentant sous forme d'un boîtier intérieur de racle de cellule.

3. Corps stratifié selon au moins la revendication 2, **caractérisé en ce qu'**une conduite d'acheminement et une conduite de reflux de même que des évacuations de la racle de cellule se présentent respectivement sous forme d'un substrat (21) et que la couche superficielle (22) est disposée sans possibilité d'adhérence sur le substrat (21).

4. Corps stratifié selon au moins la revendication 2, **caractérisé en ce qu'**un bac de reflux de la racle de cellule se présente sous forme d'un substrat (21) et que la couche superficielle (22) est disposée sans possibilité d'adhérence sur le substrat (21).

5. Corps stratifié selon au moins la revendication 2, **caractérisé en ce qu'**un récipient de conditionnement, de préférence une réserve d'encre ou de vernis, est réalisé à l'intérieur sous forme d'un substrat (21) et que la couche superficielle (22) est disposée sans possibilité d'adhérence sur le substrat (21).
